# EUROPÄISCHE PATENTSCHRIFT

(11) **EP 2 489 612 B1**
(45) Veröffentlichungstag und Bekanntmachung des Hinweises auf die Patenterteilung: **02.07.2014**
(21) Anmeldenummer: 12155818.3
(22) Anmeldetag: 16.02.2012
(51) Int. Cl.: B65G 43/02, B65G 47/51

(54) **Anordnung und Verfahren zur Überwachung einer Förderkette für eine Transport- und/oder Speichervorrichtung der Tabak verarbeitenden Industrie**
Assembly and method for monitoring a chain conveyor for a transportation and/or storage device for the tobacco processing industry
Agencement et procédé de surveillance d'une chaîne de transport pour un dispositif de transport et/ou d'enregistrement de l'industrie de traitement du tabac

(30) Priorität: 17.02.2011 DE 102011011667; 01.04.2011 DE 102011016322
(43) Veröffentlichungstag der Anmeldung: 22.08.2012
(60) Teilanmeldung: 14161704.3
(73) Patentinhaber: HAUNI Maschinenbau AG, 21033 Hamburg (DE)
(72) Erfinder: Halama, Jan, 21029 Hamburg (DE); Knepper, Thorsten, 21493 Schwarzenbek (DE); Heikens, Ralf, 21039 Börnsen (DE); Krößmann, Jürgen, 21493 Schwarzenbek (DE); Tracht, Knut, 21493 Schwarzenbek (DE)
(74) Vertreter: Stork Bamberger

(56) Entgegenhaltungen:
- EP-A1- 1 445 218
- EP-A1- 1 464 919
- DE-A1- 2 535 525
- DE-A1- 3 524 338
- GB-A- 2 406 844
- US-A- 5 361 888

## Beschreibung

Die Erfindung betrifft eine Anordnung zur Überwachung einer Förderkette für eine Transport- und/oder Speichervorrichtung der Tabak verarbeitenden Industrie nach dem Oberbegriff des Anspruchs 1.

Des Weiteren betrifft die Erfindung eine Verfahren zur Überwachung einer Förderkette für eine Transport- und/oder Speichervorrichtung der Tabak verarbeitenden Industrie nach dem Oberbegriff des Anspruchs 4.

Förderketten aus Kunststoff kommen im Bereich der Tabak verarbeitenden Industrie zum Einsatz, um stabförmige Artikel, beispielsweise Zigaretten oder Filterstäbe, vereinzelt oder vorzugsweise queraxial, mehrlagig in einem Massenstrom zu transportieren und/oder zu speichern. Üblicherweise sind solche Förderketten Bestandteil eines Speichers, der nach dem Prinzip "First in- First out" (FiFo-Speicher) arbeitet. Ein entsprechender Speicher ist z.B. aus der EP 1 445 218 B1 bekannt. Das Dokument US 5 361 888 A offenbart eine Anordnung zur Überwachung einer Förderkette nach dem Oberbegriff des Anspruchs 1, sowie eine Verfahren nach dem Oberbegriff des Anspruchs 4. Allerdings kommen solche Förderketten auch in reinen Transporteinrichtungen ohne Speicherfunktion zum Einsatz. Die Förderketten sind mittels einer Spannvorrichtung mit einer Spannkraft F gespannt, um einen sicheren Transport der Artikel zu gewährleisten und ein Durchhängen beispielsweise aufgrund hoher Belastung durch die Artikel kompensieren zu können. Die einzelnen Kettenglieder sind gelenkig über Bolzen miteinander verbunden. Die Förderkette selbst ist endlos ausgebildet und schleifenartig um Umlenkrollen und/oder Antriebsräder geführt. Dabei kann die Förderkette in einer Ebene oder in mehreren übereinander angeordneten Ebenen geführt sein.

Die genannten Förderketten sind aufgrund der hohen Anzahl von Artikeln, die mehrlagig auf den Förderketten liegen, hoch beansprucht. Das bedeutet, dass große Kräfte auf die Förderkette wirken, sowohl in Transportrichtung als auch senkrecht zur Transportrichtung. Die Belastung auf die Förderkette wird noch dadurch erhöht, dass solche Förderketten, beispielsweise in dem FiFo-Speicher, über mehrere Ebenen umlaufen. Mit anderen Worten können die Förderketten große Längen von mehr als 100m aufweisen, wodurch das Eigengewicht solcher Förderketten als zusätzliche Belastung sehr hoch ist. Neben der großen Länge, die eine sehr hohe Spannkraft der Förderkette erfordert, erhöht sich dadurch auch die mögliche Belastung der Förderkette bei voller Beladung derselben.

Aufgrund der elastischen und insbesondere plastischen Verformung der Kunststoff-Kettenglieder bzw. der gesamten Förderkette sowie des Verschleißes in den Gelenken der Kettenglieder längt sich die Förderkette. Mit anderen Worten stellt sich mit zunehmender Betriebszeit aufgrund der kontinuierlichen Belastung der Förderkette und/oder der Materialeigenschaften eine Längenänderung der Förderkette ein. Dabei ist die Längenänderung ein Maßstab für den betriebssicheren Lauf von Förderketten. Insbesondere mit der plastischen Verformung, also der bleibenden Dehnung der Kettenglieder bzw. der gesamten Förderkette und dem Verschleiß der Kettengelenke, ändert sich die Teilung der Förderkette, was dazu führt, das die Förderkette verschleißt. Übersteigt die Längenänderung einen kritischen Schwellwert, ist ein betriebssicherer Lauf nicht mehr gewährleistet. Es kann sogar dazu kommen, dass die Förderkette ohne Vorwarnung reißt. Um dieses Risiko zu reduzieren, wird die Förderkette bisher von Bedienpersonen optisch überwacht und in regelmäßigen Abständen, nämlich in bestimmten Wartungsintervallen vorsorglich entweder teilweise oder ganz ausgetauscht. Die Wartungsintervalle ergeben sich aus Erfahrungswerten, was jedoch dazu führt, dass zum Teil noch einen betriebssicheren Lauf gewährleistende Förderketten ausgetauscht werden und/oder Förderketten wegen großer zum Teil sprunghafter Längenänderung vor dem eigentlichen Wartungsintervall reißen. Anders ausgedrückt ist die bisherige Überwachung zum einen unpräzise und zum anderen unsicher.

Der Erfindung liegt demnach die Aufgabe zugrunde, eine Anordnung zu schaffen, mittels der die Überwachung der Förderkette und somit die Betriebssicherheit optimiert ist. Des Weiteren besteht die Aufgabe darin, ein entsprechendes Verfahren vorzuschlagen.

Diese Aufgabe wird mit der Anordnung gemäß Anspruch 1 gelöst. Anders ausgedrückt wirkt die Förderkette mit der Messanordnung zur individuellen Bestimmung der Wartungsintervalle zusammen. Durch die Ermittlung der bleibenden Dehnung der Förderkette, die sich aus der Längenänderung der Förderkette ergibt, kann erstmals quasi online die Längung der Förderkette als Maßstab für einen betriebssicheren Lauf der Förderkette ermittelt und ausgewertet werden. Mit anderen Worten wird eine Bedienperson bei Erreichen eines kritischen Wertes der Längung, beispielsweise einem Schwellwert von >5% Dehnung, wahlweise gewarnt und/oder aufgefordert werden, die Förderkette oder Teile davon zu wechseln. Die Erfindung erlaubt also das automatische Anzeigen von Wartungsintervallen hochbelasteter Förderketten. Das bedeutet, dass die Förderkette oder Teile davon tatsächlich nur dann ausgetauscht werden müssen, wenn der Verschleiß so groß ist, dass ein betriebssicherer Lauf nicht mehr gewährleistet ist.

Die Erfindung zeichnet sich dadurch aus, dass das Spannmittel als Elektrospannzylinder ausgebildet ist und die Kettenglieder mittels Kettenbolzen aus Stahl, deren Abstand die Kettenteilung definiert, gelenkig miteinander verbunden sind. Durch den Elektrospannzylinder als Spannmittel besteht zu jeder Zeit die Möglichkeit, die Spannkraft innerhalb der Förderkette wahlweise konstant zu halten oder individuell und kontrolliert zu variieren. Dadurch wird die Ermittlung der Längenänderung mittels der Messanordnung unterstützt.

Erfindungsgemäß umfasst die Messanordnung ein Anzeigemittel zum Anzeigen eines Wartungshinweises und/oder einen Kraftmesssensor zur Ermittlung der Spannkraft F. Das Anzeigemittel erleichtert das Überwachen der Förderkette, da der Bedienperson deutlich das Zeichen zum Ausführen der notwendigen Wartung der Förderkette bzw. zum Austausch mindestens von Teilen derselben gegeben wird. Durch den zusätzlichen Kraftmesssensor kann zu jeder Zeit exakt die tatsächliche Spannkraft F der Förderkette ermittelt werden, was die Aussagekraft der Messanordnung und die Vergleichbarkeit der Messergebnisse erhöht. Anders ausgedrückt wird die Zuverlässigkeit und Genauigkeit der Messanordnung bzw. der daraus resultierenden Messergebnisse verbessert.

Nach der Erfindung die Messanordnung mindestens ein Referenzkettenglied in der Förderkette, mindestens zwei Sensoren sowie ein Steuermittel umfasst, wobei ein Sensor zur Erkennung eines vollständigen Umlaufes der Förderkette anhand des Referenzkettengliedes ausgebildet und im Bereich der Förderkette angeordnet und der andere Sensor zur Erkennung des Spannweges S_{Sp} der Spannvorrichtung ausgebildet und im Bereich der Spannvorrichtung angeordnet ist, und das Steuermittel zum Bestimmen der Ausgangs-Länge S_{F} der Förderkette sowie zum Berechnen der Längenänderung der Förderkette anhand der Ausgangs-Länge S_{F} und des Spannweges S_{Sp} bei der Spannkraft F ausgebildet ist. Durch diese Messanordnung ist auf einfache und sichere Weise die Ländenänderung der Förderkette bestimmbar. Das Referenzkettenglied wird von dem ersten Sensor erkannt. Zwischen zwei Sensorsignalen bei einem vollständigen Umlauf der Förderkette wird die Anzahl der Umdrehungen des Antriebsrades mit bekannter Zähnezahl gezählt. Aus der (Ausgangs)Teilung der Förderkette, der Zähnezahl des Antriebsrades sowie der Anzahl der Umdrehungen des Antriebsrades wird die Ausgangslänge S_{F} der Förderkette bestimmt. Mit dieser Ausführung lässt sich auch die Anzahl der Kettenglieder bestimmen. Nach einem Messintervall (nach einem oder mehreren vollständigen Umläufen der Förderkette) werden der Spannweg S_{Sp} und die Spannkraft F ausgelesen. Aus dem Spannweg S_{Sp} und der Ausgangslänge S_{F} wird durch das Steuermittel die Längenänderung der Förderkette bei der Spannkraft F errechnet. Mit anderen Worten wird durch die Position der Spannvorrichtung bei konstanter Spannkraft F einerseits und die Anzahl der Kettenglieder andererseits die prozentuale Dehnung der Förderkette unter definierter Last errechnet.

Eine weitere Ausführungsform nicht Teil der Erfindung zeichnet sich dadurch aus, dass die Messanordnung zwei Sensoren sowie ein Steuermittel umfasst, wobei die beiden Sensoren in einem Abstand A zueinander im Bereich der Förderkette angeordnet sind, der dem ein- oder mehrfachen Abstand der Kettenteilung entspricht derart, dass die Signale der beiden Sensoren bei einer Längenänderung eines Kettengliedes von 0% mit einem Wert Δ t=0 exakt übereinander und bei einer Längenänderung eines Kettengliedes größer 0% um einen Werft Δ t≠0 versetzt zueinander liegen, und das Steuermittel zum Berechnen der Längenänderung der Förderkette für den Abstand A anhand der Fördergeschwindigkeit der Förderkette und des Wertes Δ t bei der Spannkraft F ausgebildet ist. Mit dieser Ausführungsform wir die Teilung der Förderkette bestimmt, indem die Kettenbolzen von den beiden Sensoren erkannt werden. Anstelle der Kettenbolzen kann die Teilung der Förderkette selbstverständlich auch mittels der vorauslaufenden Kanten der Kettenglieder oder anderen Referenzmarken an den Kettengliedern erkannt bzw. ermittelt werden. Solange keine Längenänderung der Förderkette erfolgt, liegen die beiden Signale übereinander, da die Teilung der Förderkette dem Abstand der Sensoren entspricht. Durch die Längenänderung der Förderkette ändert sich aber auch deren Teilung. Konkret ändert sich der Abstand z.B. der Kettenbolzen, so dass die Signale der beiden Sensoren zeitversetzt unter Bildung von Δ t erfolgen. Aus der bekannten Geschwindigkeit der Förderkette einerseits und Δ t andererseits wird dann der tatsächliche Wert der Längenänderung für den Abstand A errechnet.

Die Aufgabe wird auch mit dem Verfahren gemäß Anspruch 4 gelöst. Die sich daraus ergebenden Vorteile wurden bereits ausführlich im Zusammenhang mit der Anordnung beschrieben, weshalb zur Vermeidung von Wiederholungen auf die entsprechenden Passagen verwiesen wird.

Weitere zweckmäßige und/oder vorteilhafte Merkmale und Weiterbildungen der Erfindung ergeben sich aus den Unteransprüchen und der Beschreibung. Besonders bevorzugte Ausführungsformen sowie das Verfahrensprinzip werden anhand der beigefügten Zeichnung näher erläutert. In der Zeichnung zeigt:
- Fig. 1: eine perspektivische Darstellung einer Speichereinrichtung der Tabak verarbeitenden Industrie mit einer Messanordnung zum Ermitteln der Längenänderung der Förderkette,
- Fig. 2: einen Ausschnitt der Speichereinrichtung gemäß Figur 1, nämlich den Bereich des Antriebsrades der Förderkette in einer ersten Ausführungsform,
- Fig. 3: einen Ausschnitt der Speichereinrichtung gemäß Figur 1, nämlich den Bereich der Spannvorrichtung,
- Fig. 4: eine schematische Darstellung der Messanordnung,
- Fig. 5: ein Diagramm zur Darstellung der Anzahl der Umdrehungen des Antriebsrades zwischen zwei Signalen S bei einer ersten Ausführungsform der Messanordnung,
- Fig. 6: ein Diagramm zur Darstellung des Spannweges S_{Sp},
- Fig. 7: einen Ausschnitt der Speichereinrichtung gemäß Figur 1, nämlich den Bereich des Antriebsrades der Förderkette in einer weiteren Ausführungsform,
- Fig. 8: ein Diagramm zur Darstellung des Signalverlaufs zwischen zwei Signalen S bei einer zweiten Ausführungsform,
- Fig. 9: ein Diagramm zur Darstellung der Anzahl von Inkrementen bei einer neuen Kette, und
- Fig. 10: ein Diagramm zur Darstellung der Anzahl von Inkrementen bei einer gedehnten Kette.

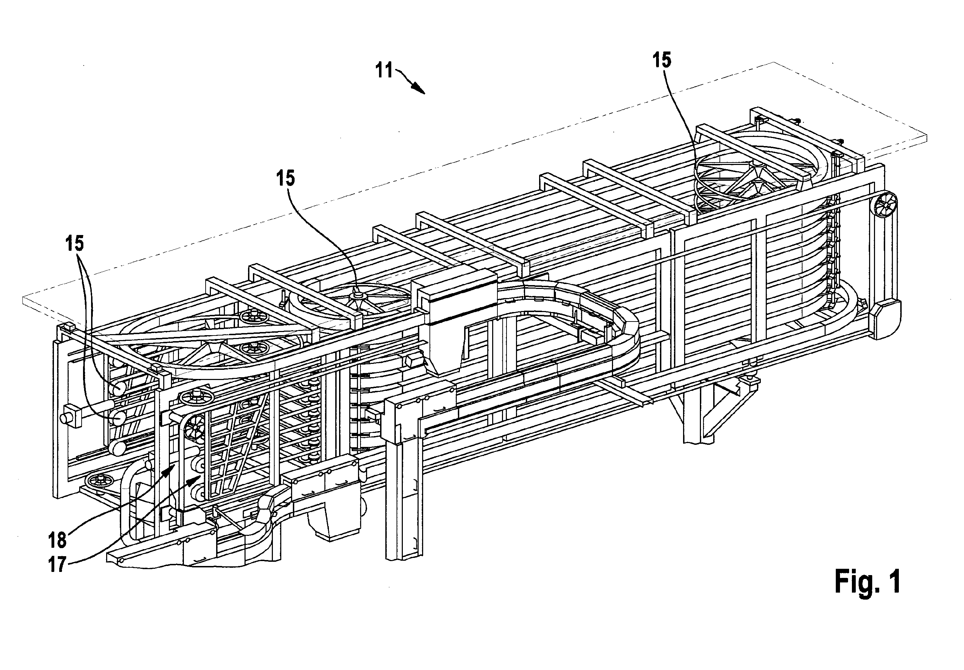

Die in der Zeichnung dargestellten Ausführungsformen dienen zum Messen einer Längenänderung von Förderketten aus Kunststoff in Transport- und/oder Speichereinrichtungen der Tabak verarbeitenden Industrie. Wenngleich die folgende Beschreibung auf eine Kunststoffkette abgestellt ist, lässt sich das erfindungsgemäße Verfahrensprinzip auch in einer Anordnung nutzen, die z.B. eine Stahl- oder Aluminiumkette verwendet. Zum besseren Verständnis der Erfindung wird anhand der Figur 1 eine bevorzugte Anwendung der erfindungsgemäßen Anordnung 10 beschrieben, nämlich ein so genannter FiFo-Speicher, wobei sich die Erfindung nicht auf die Anwendung in einem FiFo-Speicher beschränkt.

In der Figur 1 ist die Anordnung 10 eine Speichereinrichtung 11 (im Folgenden auch als Speicher bezeichnet) zum Fördern und Speichern stabförmiger Artikel, beispielsweise Zigaretten, dargestellt. Der Speicher 11 umfasst eine endlos umlaufende Förderkette 12. Diese Förderkette 12 besteht aus einzelnen aus Kunststoff gebildeten Kettengliedern 13. Die Kettenglieder 13 sind zur Bildung der Förderkette 12 gelenkig miteinander verbunden. Üblicherweise sind die Kettenglieder 13 über Kettenbolzen 14 miteinander verbunden. Andere Verbindungen der Kettenglieder 13, z.B. über Stifte, Haken oder andere geeignete Verbindungsmittel, sind aber ebenfalls möglich. Die Förderkette 12 selbst ist um mehrere Umlenkrollen 15 und mindestens ein Antriebsrad 16 geführt. Das Antriebsrad 16 ist ein Zahnrad mit einer bekannten Zähnezahl. Des Weiteren umfasst die Speichereinrichtung 11 eine Spannvorrichtung 17 für die Förderketten 12. Die Spannvorrichtung 17 weist Spannmittel 18 zum Aufbringen eine Spannkraft F in die Förderkette 12 auf. Wie weiter oben erwähnt, ist die Speichereinrichtung 10 nur beispielhaft erwähnt und kann durch einfache Transporteinrichtungen, Speichermittel oder Fördereinheiten mit einer endlos umlaufenden Förderkette 12 ersetzt werden. Erfindungsgemäß umfasst die Anordnung 10 des Weiteren eine Messanordnung 19, mittels der eine Längenänderung der Förderkette 12 unter konstanter und definierter Spannkraft F ermittelbar ist. Anders ausgedrückt ermöglicht die Messanordnung 19 in Wirkverbindung mit der Förderkette 12 das Ermitteln der Längenänderung der Förderkette 12.

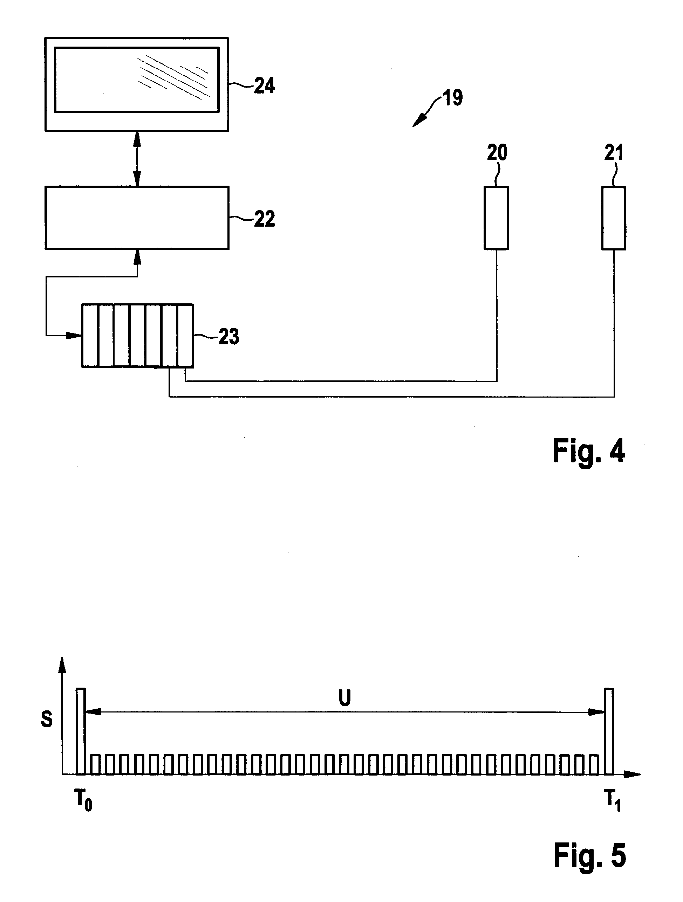

Das Spannmittel 18 ist als Elektrospannzylinder ausgebildet. Damit ist das gesteuerte und kontrollierte Einstellen der Spannkraft F gewährleistet, beispielsweise zu Referenzmessungen. Die Kettenglieder 13 sind mittels der Kettenbolzen 14 gelenkig miteinander verbunden. Vorzugsweise sind die Kettenbolzen 14 aus Stahl hergestellt. Selbstverständlich können auch andere Materialien, wie z.B. Kunststoffe, zur Herstellung der Kettenbolzen 14 eingesetzt werden. Der Abstand A zweier Kettenbolzen 14 definiert die Teilung der Förderkette 12. Andere Referenzmarken, wie z.B. der Abstand der jeweils vorauslaufenden Kanten von Kettengliedern 13 oder die "Lücken" zwischen den Kettengliedern 13 können ebenfalls die Teilung der Förderkette 12 definieren. Zusätzlich die Spannkraft F aus der Spannvorrichtung 17, z.B. anhand eines Stromistwertes des Elektrospannzylinders, ausgelesen werden kann, besteht nach der Erfindung, im Bereich der Spannvorrichtung 17 mindestens einen Kraftmesssensor anzuordnen, mittels dem die Spannkraft F ermittelt und angezeigt werden kann. Die Messanordnung 19 umfasst im Wesentlichen, wie z.B. der Figur 4 zu entnehmen, zwei Sensoren 20, 21 die wahlweise zentral an ein Steuermittel 22 oder an eine dezentrale Peripherie 23 des Steuermittels 22 angeschlossen sind. Bei den Sensoren 20, 21 kann es sich um analoge oder digitale Sensoren handeln. In Abhängigkeit der Ausführungsformen der Messanordnung 19, von denen weiter unten unterschiedliche Ausgestaltungen beschrieben werden, können wahlweise bevorzugt ein digitaler Sensor 20 und ein analoger Sensor 21 als ein erstes Sensorpaar oder zwei digitale Sensoren 20, 21 als ein zweites Sensorpaar eingesetzt werden. Erfindungsgemäß umfasst die Messanordnung 19 auch ein Anzeigemittel 24, das mit dem Steuermittel 22 verbunden ist.

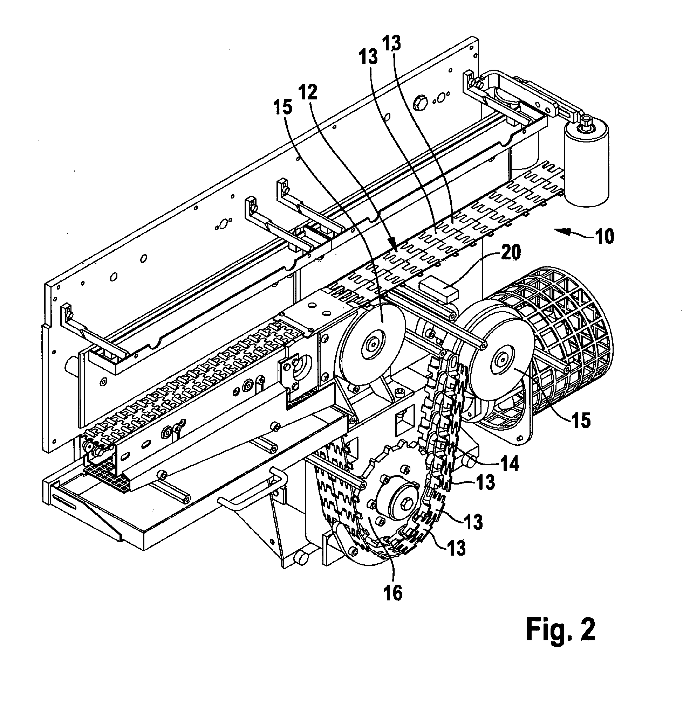

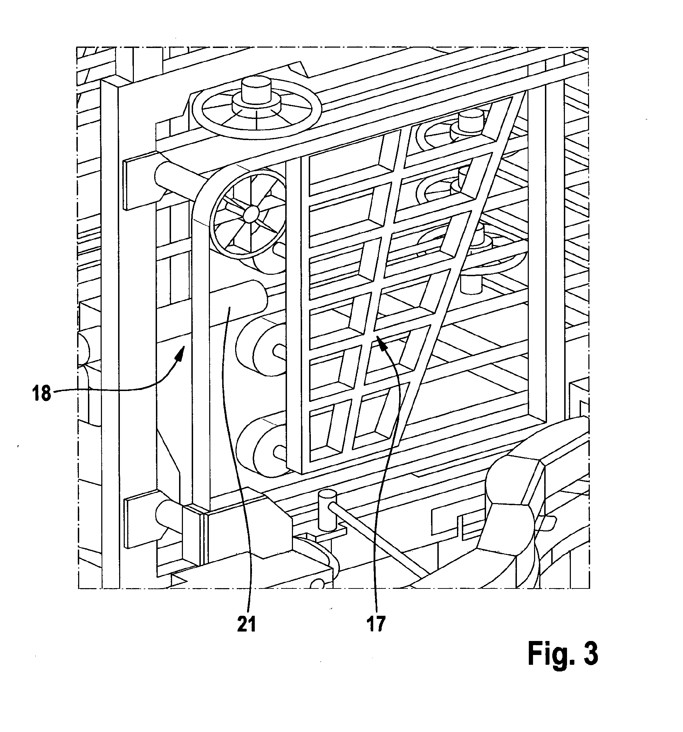

Nach der Erfindung insbesondere gemäß der Figuren 2 und 3 umfasst die Messanordnung 19 mindestens ein Referenzkettenglied 25 in der Förderkette 12, mindestens zwei Sensoren 20, 21 sowie das Steuermittel 22. Das Referenzkettenglied 25 kann z.B. ein eingefärbtes Kettenglied 13 oder ein Kettenglied 13 mit einem magnetischen Kettenbolzen in Kombination mit einem Lesekontakt sein. Andere Referenzkettenglieder 25 sind ebenfalls einsetzbar. Einer der Sensoren 20 ist zur Erkennung eines vollständigen Umlaufes der Förderkette 12 anhand des Referenzkettengliedes 25 ausgebildet und im Bereich der Förderkette 12 angeordnet. Dieser vorzugsweise digitale Sensor 20 erkennt das Referenzkettenglied 25. Bei dem zweiten Signal dieses Sensors 20 ist die Förderkette 12 einmal vollständig umgelaufen. Der andere Sensor 21 ist vorzugsweise ein analoger Sensor 21 und zur Erkennung des Spannweges S_{Sp} der Spannvorrichtung 17 ausgebildet. Der Sensor 21 ist im Bereich der Spannvorrichtung 17 angeordnet und optional integraler Bestandteil des Spannmittels 18. Das Steuermittel 22 und/oder dessen dezentrale Peripherie 23 sind zum Bestimmen der Ausgangs-Länge S_{F} der Förderkette 12 sowie zum Berechnen der Längenänderung der Förderkette 12 anhand der Ausgangs-Länge S_{F} und des Spannwegs S_{Sp} bei der Spannkraft F ausgebildet. Die Ausgangs-Länge S_{F} kann auch als Wert in einem Parameter im Speicher des Steuermittels 22 hinterlegt sein.

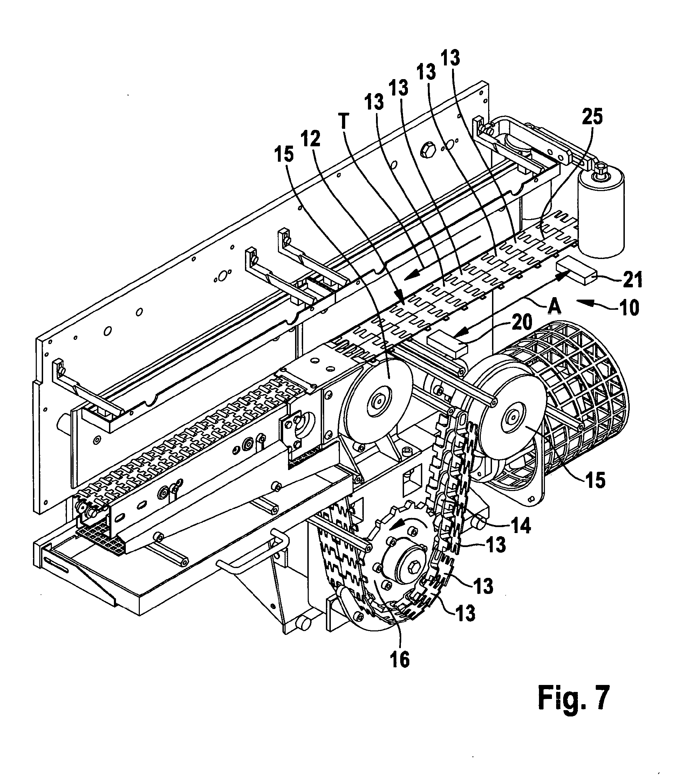

In einer weiteren Ausführungsform nicht Teil der Erfindung insbesondere gemäß der Figur 7 umfasst die Messanordnung 19 ebenfalls zwei Sensoren 20, 21, die jedoch bevorzugt beide digital ausgebildet sind. Die beiden Sensoren 20, 21 sind in einem festen Abstand A zueinander im Bereich der Förderkette 12 angeordnet, der dem einfachen oder mehrfachen Abstand der Kettenteilung entspricht. Das bedeutet, dass die Signale der Sensoren 20, 21 in einer Ausgangssituation, in der die Förderkette 12 noch keine Längung aufweist, genau übereinander liegen. Aufgrund des identischen Abstandes zwischen den Sensoren 20, 21 einerseits und z.B. den benachbarten Kettenbolzen 14 der Förderkette 12 andererseits lösen die Signal gleichzeitig aus, so dass eine Zeitdifferenz von Δ t=0 zwischen den Signale besteht. Mit zunehmender Längung der Förderkette 12 ändert sich der Abstand zwischen den Kettenbolzen 14, so dass die Signale zeitversetzt mit Δ t≠0 ausgelöst werden. Die Signale verschieben sich zueinander, indem der Abstand der Kettenbolzen 14 größer wird, während der Abstand A zwischen den Sensoren 20, 21 fest ist. Des Weiteren umfasst die Messanordnung 19 ein Steuermittel 22, das zum Berechnen der Längenänderung der Förderkette 12 für den Abstand A anhand der Fördergeschwindigkeit der Förderkette 12 und des Wertes Δ t bei der Spannkraft F ausgebildet ist.

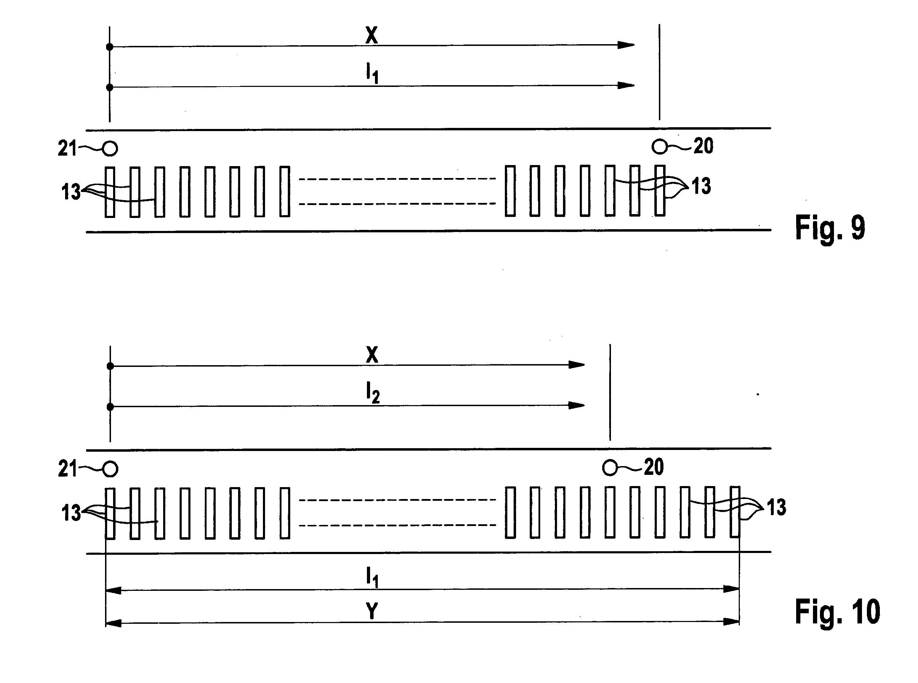

Anhand der Figuren 7 und 9 und 10 wird eine weitere Ausführungsform der Erfindung beschrieben. Ein Kettenglied 13 der Förderkette 12 dient als Referenzkettenglied 25, beispielsweise durch eine Markierung. Das Referenzkettenglied 25 ist Bestandteil der Messanordnung 19, die weiterhin zwei Sensoren 20, 21 sowie ein Steuermittel 22 umfasst. Die beiden Sensoren 20, 21 sind in einem festen Abstand A zueinander angeordnet, und zwar im Bereich des Antriebsrades 16 der Förderkette 12. Das Antriebsrad 16 kann im Einlaufbereich oder Auslaufbereich der Speichereinrichtung 11 angeordnet sein. Im Beispiel gemäß der Figur 7 sind die beiden Sensoren 20, 21 im Auslaufbereich angeordnet, wobei die Sensoren 20, 21 in Laufrichtung der Förderkette 12 vor dem Antriebsrad 16, also auf der Zugseite der Förderkette 12, liegen, da in diesem Bereich die größte Dehnung der Förderkette 12 auftritt. Selbstverständlich können die Sensoren 20, 21 auch an anderen Bereichen der Förderkette 12 platziert sein. Die Messanordnung 19 weist des Weiteren optional einen Inkrementalgeber als Bestandteil des Antriebs für das Antriebsrad 16 auf, so dass bei jeder Umdrehung des Antriebsrades 16 eine definierte Anzahl von Inkrementen ausgegeben und durch das Steuermittel 22 gezählt sowie durch das Anzeigemittel 24 angezeigt werden kann.

Im Folgenden wird das Verfahrensprinzip der erfindungsgemäßen Messabläufe anhand der Figuren näher erläutert:
Bei dem Verfahren zur Überwachung einer Förderkette 12 für eine Transport- und/oder Speichereinrichtung der Tabak verarbeitenden Industrie ist die Förderkette 12 um mehrere Umlenkrollen 15 und mindestens ein Antriebsrad 16 geführt. Die Förderkette 12, die endlos umläuft, ist mittels der Spannvorrichtung 17 mit einer Spannkraft F gespannt. Erfindungsgemäß wird die Längenänderung der Förderkette 12 bei einer konstanten und definierten Spannkraft F der Förderkette 12 automatisch mit einer Messanordnung 19 ermittelt, wobei das Ermitteln der Längenänderung online während des Betriebs der Förderkette 12 ausgeführt wird. Da eine Längenveränderung, insbesondere die bleibende Dehnung, ein Maßstab für das Verschleißverhalten der Förderkette 12 ist, können die Messergebnisse zur Bestimmung der notwendigen Wartungsintervalle verwendet werden. Anders ausgedrückt kann mit den Messergebnissen der Zeitpunkt des Austausches der Förderkette 12 oder Teilen davon festgelegt und angezeigt werden. Die Art und Weise der Messung der Längenänderung kann variieren. Im Folgenden werden bevorzugte Messmethoden beschrieben.

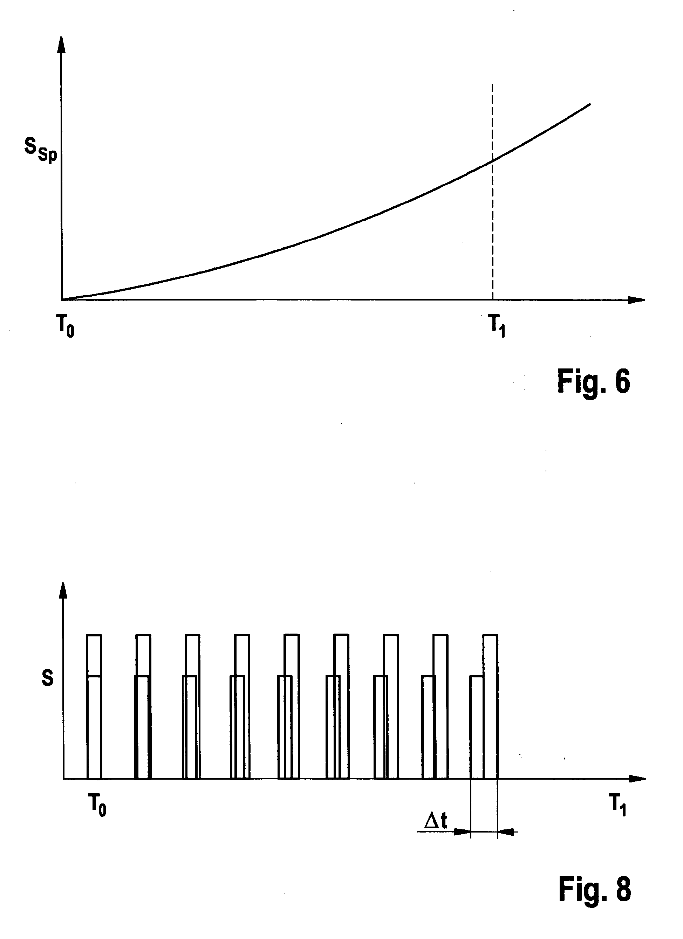

Bei der Ausführungsform gemäß der Figuren 2 und 3 erfolgt die Erkennung der Förderkette 12 bzw. genauer des Referenzkettengliedes 25 mittels des ortsfesten Sensors 20. Das Referenzkettenglied 25 kann z.B. ein eingefärbtes Kettenglied 13 sein, das mittels eines Farbsensors erkannt wird. Zwischen zwei Signalen S zu den Zeitpunkten T₀ und T₁ des einen Sensors 20, als bei einem vollständigen Umlauf U der Förderkette 12, wird die Anzahl der Umdrehungen des Antriebsrades 16, dessen Anzahl der Zähne bekannt ist, gezählt (siehe z.B. Figur 5). Aus der Anzahl der Umdrehungen des Antriebsrades 16 und den Signalen S zu den Zeitpunkten T₀ und T₁ des Sensors 20 wird die Gesamtzahl der Kettenglieder 13 ermittelt. Zum Zeitpunkt T₁, also dem zweiten Sensorsignal, das den vollständigen Umlauf U der Förderkette 12 anzeigt, werden der Spannweg S_{Sp} der Förderkette 12 (siehe z.B. Figur 6) und die Spannkraft F wahlweise ausgelesen oder durch Sensoren ermittelt und angezeigt. Für die Ermittlung des Spannweges S_{Sp} der Förderkette 12 ist der zweite Sensor 21 vorgesehen. Die Spannkraft F kann z.B. aus dem Stromistwert des Elektrospannzylinders ausgelesen oder durch einen zusätzlichen Kraftmesssensor ermittelt und angezeigt werden. Anhand der Position der Spannvorrichtung 17, also dem Spannweg S_{Sp}, bei konstanter Spannkraft F und der Anzahl der Kettenglieder 13 wird die prozentuale Dehnung der Förderkette 12 unter definierter Last berechnet.

Es besteht auch die Möglichkeit, die Ausgangs-Länge S_{F}, also die rechnerische Länge der Förderkette 12, aus der Zähnezahl des Antriebsrades 16, der Anzahl der Umdrehungen des Antriebsrades 16 bei einem vollständigen Umlauf U der Förderkette 12 sowie der Ausgangs-Teilung der Förderkette 12, also der ursprünglichen Teilung einer noch nicht verschlissenen Förderkette 12 wird, zu bestimmen. Zum Zeitpunkt T₁, als dem zweiten Sensorsignal, das den vollständigen Umlauf U der Förderkette 12 anzeigt, werden der Spannweg S_{Sp} der Förderkette 12 und die Spannkraft F wahlweise ausgelesen oder durch Sensoren, wie weiter oben beschrieben, angezeigt. Aus dem Spannweg S_{Sp} der Förderkette 12 und der Ausgangs-Länge S_{F} wir die Längung der Förderkette 12 bei der Spannkraft F berechnet. Die Berechnung kann mittels des Steuermittels 22 oder auch über die Maschinensteuerungen z.B. des Speichers 11 erfolgen.

Bei einer Ausführungsform nicht Teil der Erfindung gemäß der Figur 7 werden die Kettenbolzen 14 der Förderkette 12 von den Sensoren 20, 21 erkannt. Anstelle der Kettenbolzen 14 können die Sensoren 20, 21 auch die jeweils vorauslaufenden Kanten der Kettenglieder 13, die "Lücken" in der Förderkette 12 oder andere Referenzmarken erkennen. Vorzugsweise werden die Kettenbolzen 14 oder andere Referenzmarken in einem definierten Abstand A der Sensoren 20, 21 direkt vor dem Antriebsrad 14 abgefragt. Dadurch, dass der Abstand A der Sensoren 20, 21 fest und bekannt ist und exakt der Ausgangs-Teilung der Förderkette 12, also der ursprünglichen Teilung einer noch nicht verschlissenen Förderkette 12, entspricht, liegen die Signale S anfangs, also zum Zeitpunkt T₀, exakt übereinander. Anders ausgedrückt ist die Zeitdifferenz Δ t, zu der die beiden Signale S ausgelöst werden, gleich null. Bei einer Längung der Förderkette 12 bildet sich ein A t≠0. Wie der Figur 8 zu entnehmen ist, vergrößert sich das Δ t zunehmend. Anders ausgedrückt liegen die beiden Signale S der Sensoren 20, 21 zum Zeitpunkt T₁ versetzt zueinander, was gleichbedeutend mit einer Längenänderung der Förderkette 12 ist. Da der Abstand A der Sensoren 20, 21 fix ist, muss die Signalverschiebung durch eine Veränderung des Abstandes der Kettenbolzen 14 oder anderer Referenzmarken begründet sein. Aus der bekannten Fördergeschwindigkeit der Förderkette 12 sowie dem Δ t wird der tatsächliche Wert der Längung der Förderkette 12 für den Abstand A berechnet.

Es besteht auch die Möglichkeit, durch die Winkelgrade des Antriebsmotors bzw. des Antriebsrades 16, die beiden Signale S der Sensoren 20, 21 sowie den Abstand A der Sensoren 20, 21 die prozentuale Dehnung eines Kettengliedes 13 bei einer definierten Spannkraft F zu ermitteln. Alternativ kann die prozentuale Dehnung eines Kettengliedes 13 auch über die Umdrehungen des Antriebsmotors bzw. des Antriebrades 16, die beiden Signale S der Sensoren 20, 21 sowie die Frequenz der Signale S ermittelt werden.

Bei der Ausführungsform gemäß der Figuren 7, 9 und 10 werden die Kettenglieder 13 und/oder die Anzahl der Inkremente der Förderkette 12 zwischen den beiden Sensoren 20, 21 gezählt. Bevorzugt erkennt der in Transportrichtung T der Förderkette 12 vordere Sensor 21 das Referenzkettenglied 25. Durch das Signal wird im Programm des Steuermittels 22 ein erster Merker M1 gesetzt. In der Zeit, in der der Merker M1 gesetzt ist, werden wahlweise die Kettenglieder 13 und/oder bevorzugt die Inkremente vom Antrieb des Antriebsrades 16 gezählt. Sobald das Referenzkettenglied 25 den zweiten in Transportrichtung T hinteren Sensor 20 erreicht, wird der Merker M1 zurückgesetzt, wodurch auch die Zählung der Kettenglieder 13 und/oder der Inkremente beendet wird. Für den Messzeitraum bzw. die Messstrecke zwischen den beiden Sensoren 21, 20 wird der Zählerstand ausgewertet, angezeigt und wieder auf Null gesetzt. Ist die angezeigte Anzahl der Inkremente kleiner als ein vorgegebener Grenzwert, wird die Meldung "Speicherkette muss getauscht werden" generiert.

Bevorzugt wird der Inkrementalgeber des Antriebs des Antriebsrades 16 ausgewertet. Aus der Anzahl N_{I} der Inkremente pro Umdrehung des Antriebsrades 16, der Getriebeübersetzung ü₁ des Antriebs für das Antriebsrad 16, der Anzahl N_{z} der Zähne des Antriebsrades 16 sowie der Teilung D_{z} des Antriebsrades 16 wird ein Übersetzungsfaktor ü (Inkremente pro mm) errechnet, nämlich ü = ü₁ x N_{I}/N_{z} x D_{z}. Die Länge K der Förderkette 12 im System pro Umdrehung des Antriebsrades 16 errechnet sich durch die Formel K = D_{z} x N_{z}. Für eine neue, noch ungedehnte Förderkette 12 ergibt sich beispielsweise für eine Referenzlänge X mit x Kettengliedern 13 eine Inkrementen-Anzahl I₁. Bei einer alten, gedehnten Förderkette 12 ergibt sich diese Kettenlänge X bei einer geringeren Anzahl (kleiner x) von Kettengliedern 13. Aufgrund der geringeren Anzahl von Kettengliedern 13 ist auch die Anzahl der Inkremente I₂ geringer als I₁. Anders ausgedrückt ergibt sich bei der gleichen Anzahl von Kettengliedern 13 der alten, gedehnten Förderkette 12 eine gegenüber der Referenzlänge X größere Kettenlänge Y. Es kann eine maximal erlaubte Dehnung vorgegeben werden.

Für alle Messmethoden gilt, dass beim Überschreiten einer bestimmten Dehnung von beispielsweise 5% eine Wartung, z.B. in Form eines Austausches der Förderkette 12 oder Teilen davon, angezeigt oder ausgeführt werden muss. Vorteilhafterweise wird die den betriebssicheren Lauf der Förderkette 12 gefährdende Längenänderung der Förderkette 12 über Anzeigemittel 24 angezeigt. Eine Bedienperson kann aufgefordert werden, Die Förderkette 12 oder Teile davon zu wechseln. Die Meldung und/oder Anzeige kann in mehreren Schritten erfolgen. Bei einer Dehnung von z.B. <5% ist der Status "O.K". Bei einer Dehnung von z.B. 5% bis 7% erfolgt der Status "Warnung". Eine Dehnung von z.B. >7% führt automatisch zum Status "Stopp - Förderkette wechseln".

Die Anzeige kann auch den gesamten Messverlauf dokumentieren und anzeigen. Anders ausgedrückt kann der zeitliche Verlauf der Dehnungsänderung, also die Längung der Förderkette 12 bei konstanten und gleichen Bedingungen, insbesondere bei konstanter Spannkraft F, aufgezeichnet werden. Damit kann für eine neue Förderkette 12 ohne jeden Verschleiß, also eine Förderkette 12 mit der Ausgangs-Länge S_{F}, eine Vorhersage zu deren Lebensdauer getätigt werden. Es besteht weiterhin die Möglichkeit, dass die Messergebnisse zur Regelung der Anordnung 10 verwendet werden, indem z.B. ein kritischer Messwert in Form einer großen Längung automatisch zu einem Abschalten der Anordnung 10 führt.

## Patentansprüche

1. Anordnung (10) zur Überwachung einer Förderkette (12) für eine Transport- und/oder Speichervorrichtung der Tabak verarbeitenden Industrie, umfassend eine endlos umlaufende Förderkette (12), wobei die Förderkette (12) aus einzelnen Kettengliedern (13) aus Kunststoff gebildet und um mehrere Umlenkrollen (15) und mindestens ein Antriebsrad (16) geführt ist, und die Kettenglieder (13) mittels Kettenbolzen (14) aus Stahl, deren Abstand die Kettenteilung definiert, gelenkig miteinander verbunden sind, eine Spannvorrichtung (17) für die Förderkette (12), wobei die Spannvorrichtung (17) Spannmittel (18) zum Aufbringen einer Spannkraft F in die Förderkette (12) umfasst, sowie eine Messanordnung (19), mittels der eine Längenänderung der Förderkette (12) unter konstanter und definierter Spannkraft F automatisch ermittelbar ist, wobei die Messanordnung (19) einen Kraftmesssensor zur Ermittlung der Spannkraft F umfasst und das Spannmittel (18) als Elektrospannzylinder ausgebildet ist, **dadurch gekennzeichnet, dass** die Messanordnung (19) ein Anzeigemittel (24) zum Anzeigen eines Wartungshinweises sowie mindestens ein Referenzkettenglied (25) in der Förderkette (12), mindestens zwei Sensoren (20, 21) sowie ein Steuermittel (22) umfasst, wobei ein Sensor (20) zur Erkennung eines vollständigen Umlaufes der Förderkette (12) anhand des Referenzkettengliedes (25) ausgebildet und im Bereich der Förderkette (12) angeordnet und der andere Sensor (21) zur Erkennung des Spannweges S_{SP} der Spannvorrichtung (17) ausgebildet und im Bereich der Spannvorrichtung (17) angeordnet ist, und das Steuermittel (22) zum Bestimmen der Ausgangs-Länge S_{F} der Förderkette (12) sowie zum Berechnen der Längenänderung der Förderkette (12) anhand der Ausgangs-Länge S_{F} und des Spannweges S_{SP} bei der Spannkraft F ausgebildet ist.

2. Anordnung nach Anspruch 1, **dadurch gekennzeichnet, dass** die Messanordnung (19) mindestens ein Referenzkettenglied (25), zwei Sensoren (20, 21) sowie ein Steuermittel (22) umfasst, wobei die beiden Sensoren (20, 21) in einem Abstand A zueinander und im Bereich des Antriebsrades (16) der Förderkette (12) auf deren Zugseite angeordnet sind.

3. Anordnung nach Anspruch 2, **dadurch gekennzeichnet, dass** die Messanordnung (19) einen Inkrementalgeber umfasst.

4. Verfahren zur Überwachung einer Förderkette (12) für eine Transport- und/oder Speichervorrichtung der Tabak verarbeitenden Industrie, wobei die aus mehreren aus Kunststoff bestehenden Kettengliedern (13), die mittels Kettenbolzen (14) aus Stahl, deren Abstand die Kettenteilung definiert, gelenkig miteinander verbunden sind, gebildete Förderkette (12) um mehrere Umlenkrollen (15) und mindestens ein Antriebsrad (16) geführt ist und endlos umläuft sowie mittels einer Spannvorrichtung (17) mit einer Spannkraft F gespannt wird, **gekennzeichnet durch** die Schritte:
- automatisches Ermitteln der Längenänderung der Förderkette (12) online während des Betriebs der Förderkette (12) bei einer konstanten und definierten Spannkraft F mit einer Messanordnung (19), indem zum einen die Ausgangs-Länge S_{F} der Förderkette (12) und zum anderen der Spannweg S_{SP} der Spannvorrichtung (17) ermittelt und daraus mittels eines Steuermittels (22) der Messanordnung (19) die Längenänderung berechnet wird, wobei
- die Spannkraft F mit einem Kraftmesssensor ermittelt wird, wobei
- eine kritische, den betriebssicheren Lauf der Förderkette (12) gefährdende Längenänderung der Förderkette (12) über Anzeigemittel (24) angezeigt wird.

5. Verfahren nach Anspruch 4, **dadurch gekennzeichnet, dass** die Längenänderung der Förderkette (12) bei einer definierten Spannkraft F mittels des Steuermittels (22) aus der Anzahl der Kettenglieder (13) und/oder der Anzahl von Inkrementen zwischen den beiden Sensoren (20, 21) berechnet wird.

6. Verfahren nach Anspruch 4 oder 5, **dadurch gekennzeichnet, dass** der zeitliche Verlauf der Längenänderung der Förderkette (12) aufgezeichnet wird.

## Claims

1. An arrangement (10) for monitoring a conveyor chain (12) for a transportation and/or storage apparatus of the tobacco-processing industry, comprising a continuously rotating conveyor chain (12), wherein the conveyor chain (12) is formed from individual chain links (13) made of plastics material and is guided around a plurality of guide rollers (15) and at least one drive pulley (16), and the chain links (13) are connected together in an articulated manner by means of link pins (14) made of steel, the spacing thereof defining the chain pitch, a tensioning apparatus (17) for the conveyor chain (12), wherein the tensioning apparatus (17) comprises tensioning means (18) for applying a tensioning pressure F onto the conveyor chain (12), as well as a measuring arrangement (19), by means of which an alteration to the length of the conveyor chain (12) is determinable automatically at a constant and defined tensioning pressure F, wherein the measuring arrangement (19) comprises a pressure measuring sensor for determining the tensioning pressure F and the tensioning means (18) is configured as an electric tensioning cylinder, **characterised in that** the measuring arrangement (19) comprises a display means (24) for displaying a maintenance indicator as well as at least one reference chain link (25) in the conveyor chain (12), at least two sensors (20, 21) as well as a control means (22), wherein one sensor (20) is configured for identifying a complete revolution of the conveyor chain (12) using the reference chain link (25) and is arranged in the region of the conveyor chain (12) and the other sensor (21) is configured for identifying the tensioning path S_{SP} of the tensioning apparatus (17) and is arranged in the region of the tensioning apparatus (17), and the control means (22) is designed for determining the initial length S_{F} of the conveyor chain (12) and for calculating the alteration to the length of the conveyor chain (12) using the initial length S_{F} and the tensioning path S_{SP} at the tensioning pressure F.

2. The arrangement according to claim 1, **characterised in that** the measuring arrangement (19) comprises at least one reference chain link (25), two sensors (20, 21) as well as a control means (22), wherein the two sensors (20, 21) are arranged at a distance A from one another and being arranged in the region of the drive pulley (16) of the conveyor chain (12) on the traction side thereof.

3. The arrangement according to claim 2, **characterised in that** the measuring arrangement (19) comprises an incremental encoder.

4. A method for monitoring a conveyor chain (12) for a transportation and/or storage apparatus of the tobacco-processing industry, wherein the conveyor chain (12) formed from a plurality of chain links (13) made of plastics material which are connected together in an articulated manner by means of chain pins (14) made of steel, the spacing thereof defining the chain pitch, is guided around a plurality of guide rollers (15) and at least one drive pulley (16), and rotating continuously and is tensioned by means of a tensioning apparatus (17) at a tensioning pressure F,
**characterised by** the steps:
- automatically determining the alteration to the length of the conveyor chain (12) online during the operation of the conveyor chain (12) at a constant and defined tensioning pressure F using a measuring arrangement (19), firstly by the initial length S_{F} of the conveyor chain (12) being determined and secondly by the tensioning path S_{SP} of the tensioning apparatus (17) being determined and the alteration to the length being calculated therefrom by means of a control means (22) of the measuring arrangement (19), wherein
- the tensioning pressure F is determined by a pressure measuring sensor,
wherein
- a critical alteration to the length of the conveyor chain (12) jeopardising the safe operation of the conveyor chain (12) is displayed via display means (24).

5. The method according to claim 4, **characterised in that** the alteration to the length of the conveyor chain (12) at a defined tensioning pressure F is calculated by means of the control means (22) from the number of chain links (13) and/or the number of increments between the two sensors (20, 21).

6. The method according to claim 4 or 5, **characterised in that** the alteration to the length of the conveyor chain (12) over time is recorded.

## Revendications

1. Arrangement (10) pour la surveillance d'une chaîne transporteuse (12) destinée à un dispositif de transport et/ou de stockage de l'industrie de transformation du tabac, comprenant une chaîne transporteuse (12) tournant sans fin, la chaîne transporteuse (12) étant constituée de maillons individuels (13) en un matériau plastique et étant guidée autour de plusieurs poulies de renvoi (15) et d'au moins une roue d'entraînement (16), et les maillons (13) étant liés les uns aux autres d'une manière articulée à l'aide de boulons de chaîne (14) en acier, dont l'écartement définit le pas de la chaîne, comprenant un dispositif tendeur (17) pour la chaîne transporteuse (12), le dispositif tendeur (17) comprenant des organes tendeurs (18) pour appliquer une force de tension F dans la chaîne transporteuse (12), ainsi qu'une structure de mesure (19) à l'aide de laquelle une modification de la longueur de la chaîne transporteuse (12) peut être automatiquement déterminée pour une force de tension F constante et parfaitement définie, la structure de mesure (19) comprenant un capteur dynamométrique pour déterminer la force de tension F, et l'organe tendeur (18) étant configuré comme un vérin tendeur électrique, **caractérisé en ce que** la structure de mesure (19) comprend un moyen d'affichage (24) pour afficher une notification d'entretien, ainsi qu'au moins un maillon de référence (25) dans la chaîne transporteuse (12), au moins deux capteurs (20, 21), ainsi qu'un moyen de commande (22), un capteur (20) étant configuré pour reconnaître un tour complet de la chaîne transporteuse (12) à l'aide du maillon de référence (25) et étant disposé dans la zone de la chaîne transporteuse (12), et l'autre capteur (21) étant configuré pour reconnaître la course de tension S_{SP} du dispositif tendeur (17) et étant disposé dans la zone du dispositif tendeur (17), et le moyen de commande (22) étant configuré pour déterminer la longueur de départ S_{F} de la chaîne transporteuse (12) ainsi que pour calculer la modification de longueur de la chaîne transporteuse (12) à l'aide de la longueur de départ S_{F} et de la course de tension S_{SP} pour une force de tension F.

2. Arrangement selon la revendication 1, **caractérisé en ce que** la structure de mesure (19) comprend au moins un maillon de référence (25), deux capteurs (20, 21) ainsi qu'un moyen de commande (22), les deux capteurs (20, 21) étant disposés à une distance A l'un de l'autre et dans la zone de la roue d'entraînement (16) de la chaîne transporteuse (12) sur son côté tirant.

3. Arrangement selon la revendication 2, **caractérisé en ce que** la structure de mesure (19) comprend un transmetteur incrémentiel.

4. Procédé pour surveiller une chaîne transporteuse (12) pour dispositif de transport et/ou de stockage de l'industrie de transformation du tabac, la chaîne transporteuse (12), formée de plusieurs maillons (13) constitués d'un matériau plastique, qui sont reliés les uns aux autres d'une manière articulée à l'aide de boulons de chaîne (14) en acier et dont l'écartement définit le pas de la chaîne, étant guidée autour de plusieurs poulies de renvoi (15) et d'au moins une roue d'entraînement (16), et tournant sans fin, et étant tendue à l'aide d'un dispositif tendeur (17) selon une force de tension F, **caractérisé par** les étapes suivantes :
- détermination automatique, à l'aide d'une structure de mesure (19), de la modification de longueur de la chaîne transporteuse (12) en ligne pendant l'exploitation de la chaîne transporteuse (12) selon une force de tension F constante et parfaitement définie, en ce que l'on détermine d'une part la longueur de départ SF de la chaîne transporteuse (12) et d'autre part la course de tension S_{SP} du dispositif tendeur (17), et en ce qu'à partir de ces données, on calcule à l'aide d'un moyen de commande (22) de la structure de mesure (19) la modification de longueur, où
- la force de tension F est déterminée avec un capteur dynamométrique, où
- une modification de longueur critique de la chaîne transporteuse (12), mettant en danger le fonctionnement fiable de la chaîne transporteuse (12) est affichée par l'intermédiaire d'un moyen d'affichage (24).

5. Procédé selon la revendication 4, **caractérisé en ce que** la modification de longueur de la chaîne transporteuse (12) est, pour une force de tension F parfaitement définie, calculée à l'aide du moyen de commande (22) à partir du nombre de maillons (13) et/ou du nombre d'incréments entre les deux capteurs (20, 21).

6. Procédé selon la revendication 4 ou 5, **caractérisé en ce que** l'évolution dans le temps de la modification de longueur de la chaîne transporteuse (12) est enregistrée.
